# EUROPEAN PATENT APPLICATION

(11) **EP 1 083 623 A1**
(43) Date of publication of application: **14.03.2001**
(21) Application number: 99117889.8
(22) Date of filing: 10.09.1999
(51) Int. Cl.: H01Q 1/24, H01Q 1/08, H04M 1/02, H04B 1/38

(54) **Antenna device installed in flip cover of flip-up type portable phone**

(71) Applicant: SAMSUNG ELECTRONICS CO. LTD., Suwon-city, Kyounggi-do 441-742 (KR)
(72) Inventor: Kim, Jong-Kwang, Kyongsangbuk-do, Kumi-shi (KR)
(74) Representative: Grünecker, Kinkeldey, Stockmair & Schwanhäusser Anwaltssozietät

(57) **Abstract**

An antenna device installed in a flip cover of a flip-up type portable phone. In the flip-up type portable phone, a body has an exposed LCD (Liquid Crystal Display) and a main board. The flip cover is mechanically connected to the body by hinges and has necks extended from both sides of the flip cover, each of the necks including a hole formed by gas injection, and a groove formed to a predetermined length on a base plate of the flip cover. The antenna device has a portion fixed in the groove and a portion inserted into the hole and is electrically connected to the main board of the body. Thus, the antenna device operates upon opening the flip cover.

## Description

### BACKGROUND OF THE INVENTION

### 1. Field of the Invention

The present invention relates to a flip-up type or folder type portable phone, and more particularly, to an antenna device installed in the flip cover of a flip-up type portable phone or in the folder cover of a folder type portable phone.

### 2. Description of the Related Art

Portable phones are generally grouped into a bar type, a flip type, and a folder type. In the bar type, an antenna device is located at a top edge of a body, and under the antenna device are sequentially disposed an ear piece including a speaker, an LCD (Liquid Crystal Display), and a key pad including a plurality of keys. A microphone is disposed in a lowermost portion of the body.

A typical flip-type portable phone is comprised of a body, a flip cover, and a hinge for mechanically connecting the body to the flip cover. In the flip-type portable phone, an antenna device is located at a top edge of the body, and under the antenna device are sequentially disposed an earpiece including a speaker, an LCD, a key pad including a plurality of keys, and a microphone. For miniaturization of the portable phone, the microphone may be disposed in the flip cover.

A folder type portable phone (Startac of Motorola) is comprised of a body, a folder cover, and a hinge for mechanically connecting the body to the folder cover. In the folder type, an ear piece including a speaker is located in the folder cover and an antenna device is located at a top edge of the body. An LCD and a key pad are sequentially disposed under the antenna device, and a microphone is in a lowermost portion of the body.

Among these portable phones, a flip-up type is a kind of flip type portable phone, in which hinges are engaged with both sides of an LCD in a body to open or close a flip cover. Hence, the hinges has a rotating shaft at both sides of the LCD.

This flip-up type portable phone and its hinges are disclosed in detail in Korea Application No. 97-76184 filed by Samsung Electronics.

In the prior art, hinges of a flip cover are provided at both sides of an LCD module in a body, a speaker is located within the flip cover, and a wire is extended from the speaker and electrically connected to a main board of the body through the hinges. Holes formed in necks of the flip cover defines a path for electrically connecting the flip cover to the main board of the body.

Therefore, the flip cover has a rotating shaft at both sides of the LCD module, which is exposed regardless of the opened or closed state of the flip cover. The flip cover is so configured as to rotatedly open upward from the body.

The conventional flip-up type portable phone, however, has limitations in achieving miniaturization and lightweight in view of the current technology level.

To obtain a high transmit/receive sensitivity in the conventional flip type portable phone, a separately procured antenna device is installed at a top edge of a body, increasing structural complexity.

Furthermore, designing constraints are imposed because the antenna device should be confined to the top edge of the body. Considering that designing is very sign ficant to the portable phone relative to other electronic appliances, this is a very challenging issue.

Another problem is an inconvenience induced from extending a rod antenna of the antenna device when speech quality is poor with the flip cover opened for a call.

### SUMMARY OF THE INVENTION

An object of the present invention is to provide an antenna device installed in a flip cover of a portable phone.

Another object of the present invention is to provide a convenient antenna device in a portable phone.

A further object of the present invention is to provide an antenna device in a portable phone, which can be made in various designs.

To achieve the above objects, there is provided an antenna device installed in a flip cover of a flip-up type portable phone. In the flip-up type portable phone, a body has an exposed LCD and a main board. The flip cover is mechanically connected to the body by hinges and has necks extended from both sides of the flip cover, each of the necks including a hole formed by gas injection, and a groove formed to a predetermined length on a base plate of the flip cover. The antenna device has a portion fixed in the groove and a portion inserted into the hole and is electrically connected to the main board of the body. Thus, the antenna device operates upon opening the flip cover.

### BRIEF DESCRIPTION OF THE DRAWINGS

The above objects and advantages of the present invention will become more apparent by describing in detail preferred embodiments thereof with reference to the attached drawings in which:
FIG. 1 is a perspective view of a flip-up type portable phone according to a first preferred embodiment of the present invention;
FIG. 2 is a perspective view of a flip cover in the flip-up type portable phone shown in FIG. 1;
FIG. 3 is an exploded perspective view of the flip cover having an antenna device according to the first preferred embodiment;
FIG. 4 is a partial sectional plan view of the flip cover having the antenna device according to the first preferred embodiment;
FIG. 5 is a perspective view of a flip-up type portable phone according to a second preferred embodiment of the present invention;
FIG. 6 is a partial plan view of a flip cover having an antenna device with a rod antenna retracted according to the second preferred embodiment;
FIG. 7 is a partial plan view of the flip cover having the antenna device with the rod antenna extended according to the second preferred embodiment;
FIG. 8 is a partial plan view of a flip cover having an antenna device with a rod antenna retracted according to a third preferred embodiment; and
FIG. 9 is a partial plan view of the flip cover having the antenna device with the rod antenna extended according to the third preferred embodiment.

### DETAILED DESCRIPTION OF THE PREFERRED EMBODIMENTS

Preferred embodiments of the present invention will be described in detail with reference to the attached drawings. Like reference numerals denote the same components in the drawings. It is to be noted that a detailed description of a known function or structure of the present invention will be omitted if it is deemed to obscure the subject matter of the present invention.

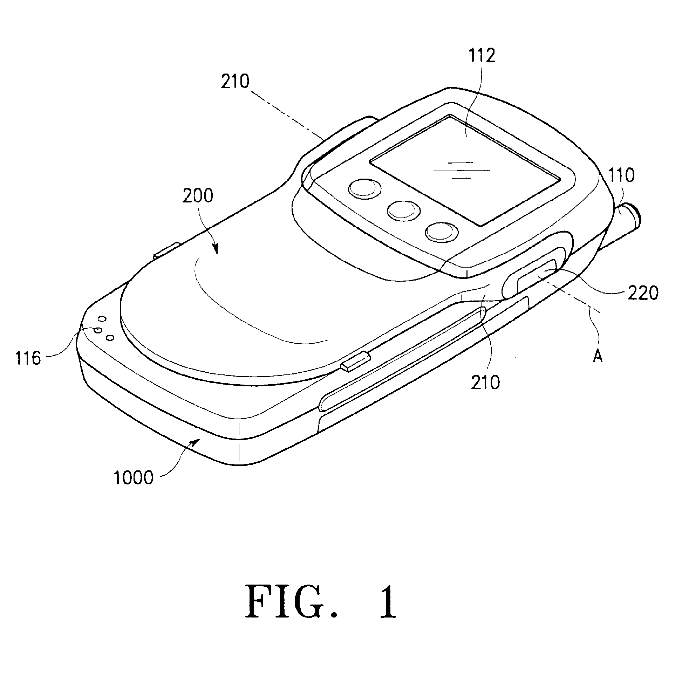

FIG. 1 is a perspective view of a flip-up type portable phone according to a first preferred embodiment of the present invention. The following description is conducted with the understanding that the present invention is adaptable to a folder type portable phone because the two types are of the same in that the flip cover and the folder cover are opened by hinges, protect key pads, and are flipped up open. Hinges of the flip-up type portable phone are disposed at both sides of an LCD, whereas those of the folder type portable phone are installed at uppermost ends of a body.

Referring to FIG. 1, the flip-up type portable phone of the present invention is comprised of a body 100, a flip cover 200, and hinges (not shown) for mechanically connecting the body 100 to the flip cover 200.

As well known, the hinges are installed at both sides of an LCD 112 so that the flip cover 200 is opened around a rotating axis A1. The LCD 112 is exposed regardless of the opened or closed state of the flip cover 200.

An antenna housing 110 is provided at an uppermost end of the body 100, for holding a helical antenna (not shown). Under antenna the housing 110 are sequentially arranged the LCD 112 and a key pad covered with the flip cover 200. A microphone 116 is disposed in a lowermost portion of the body.

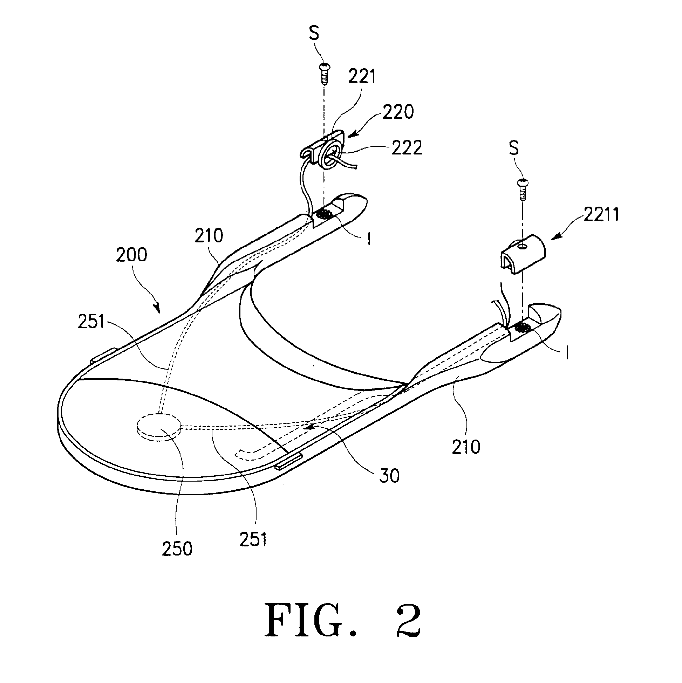

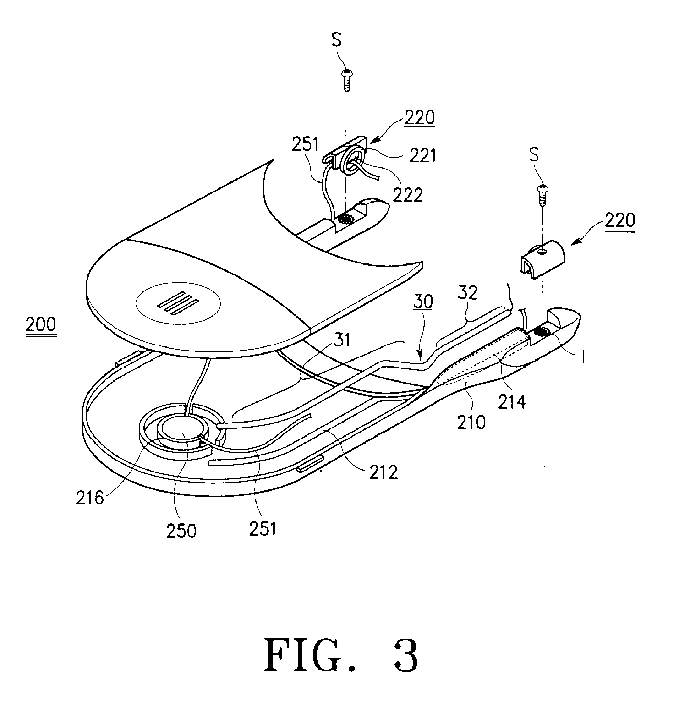

The flip cover 200 includes an antenna device (see FIGs. 2 and 3) and an ear piece having a speaker (see FIGs. 2 and 3) built therein.

The flip cover 200 has necks 210 extended from both sides thereof and is hinged to the body 100 by use of flip dummies 220.

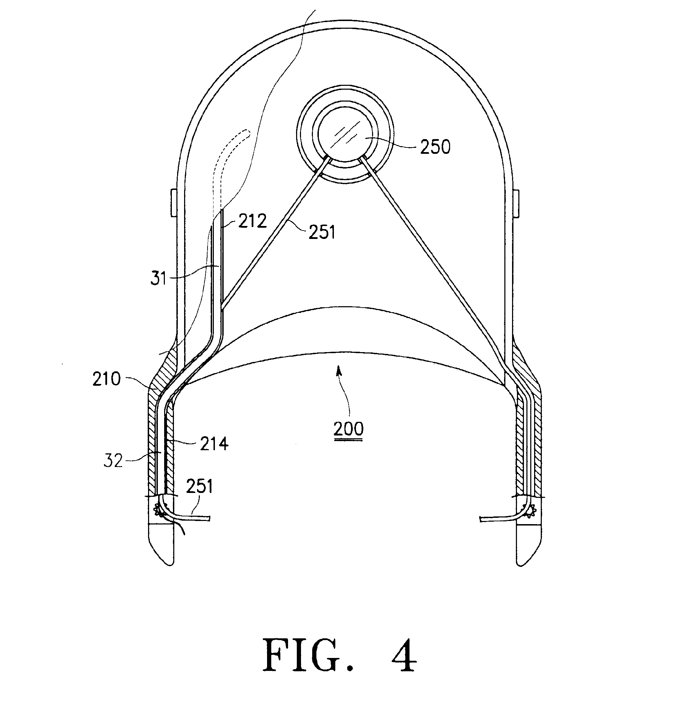

FIG. 2 is a perspective view of the flip cover. FIGs. 3 and 4 are an exploded perspective view and a partial sectional plan view of the antenna device installed in the flip cover according to the first preferred embodiment of the present invention.

Referring to FIGs. 2, 3, and 4, the flip cover 200 of the present invention is comprised of a speaker 250 and an antenna device 30. The flip cover 200 is hinged to the body 100 by use of screws S, insertion holes I, and the flip dummies 220.

The speaker 250 is fixedly fit into a rib 216 protruding from a base plate of the flip cover 200. Being extended from the speaker 250, wires 251 are directed toward the body 100 through holes 214 formed in the necks 210 of the flip cover 200 by gas injection as well known in the field, and holes 222 formed in cylindrical members 221 of the flip dummies 220.

The antenna device 30 is a core wire surrounded with an insulating tube, installed in the flip cover 200. A groove 212 is formed in the flip cover 200 to receive the antenna device 30. A portion 31 of the antenna device 30 is held in the groove 212, and the other portion 32 thereof is inserted into a hole 214.

In accordance with the first embodiment of the present invention, the flip cover 200 includes the speaker 250 and the antenna device 30. Both wires 215 are extended from the speaker 250 and directed toward the body 100 through the holes 214 and the flip dummies 220. The core wire of the antenna device 30 is electrically connected to a main board of the body 100 through the hole 214 and the flip dummy 220.

The antenna device 30 is fixed along the groove 212 by an adhesive means like an adhesive tape.

When a user opens the flip cover 200 for a call, the portable phone is automatically set to a speech mode and the antenna device 30 starts to operate. Thus, the portable phone is very convenient to the user and design and structural simplicity can be obtained, contributing to the increase of productivity.

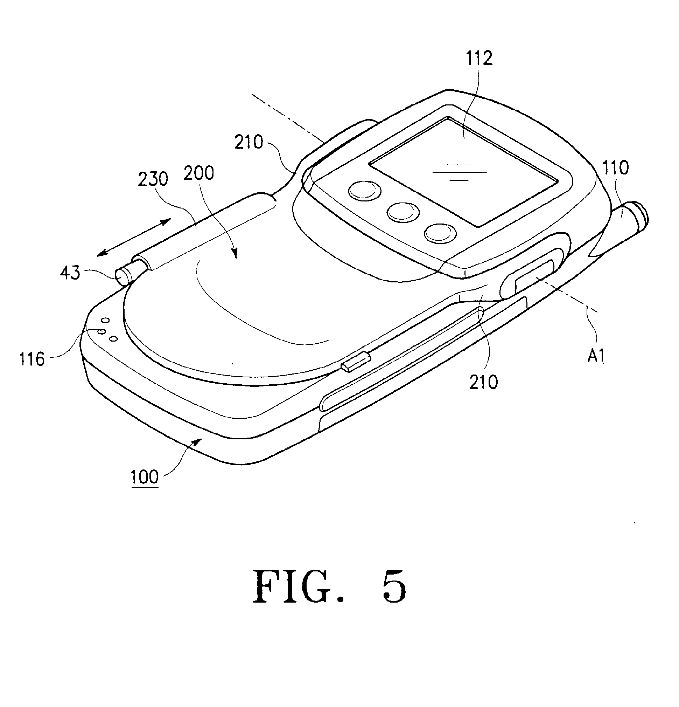

FIG. 5 is a perspective view of a flip-up type portable phone according to a second preferred embodiment of the present invention.

Referring to FIG. 5, the portable phone is comprised of the body 100, the flip cover 200, and hinges (not shown) for mechanically connecting the body 100 to the flip cover 200. The flip cover 200 moves between opened and closed positions around the rotating axis A1.

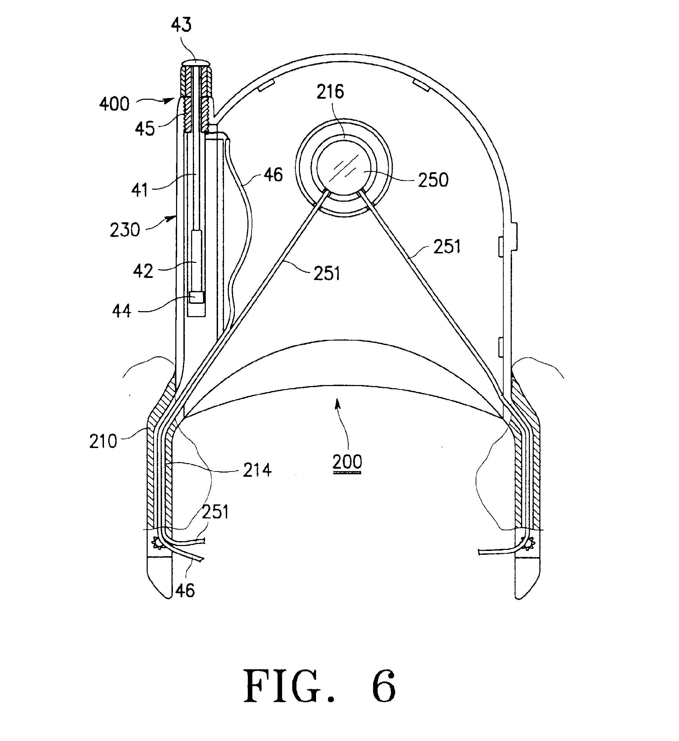

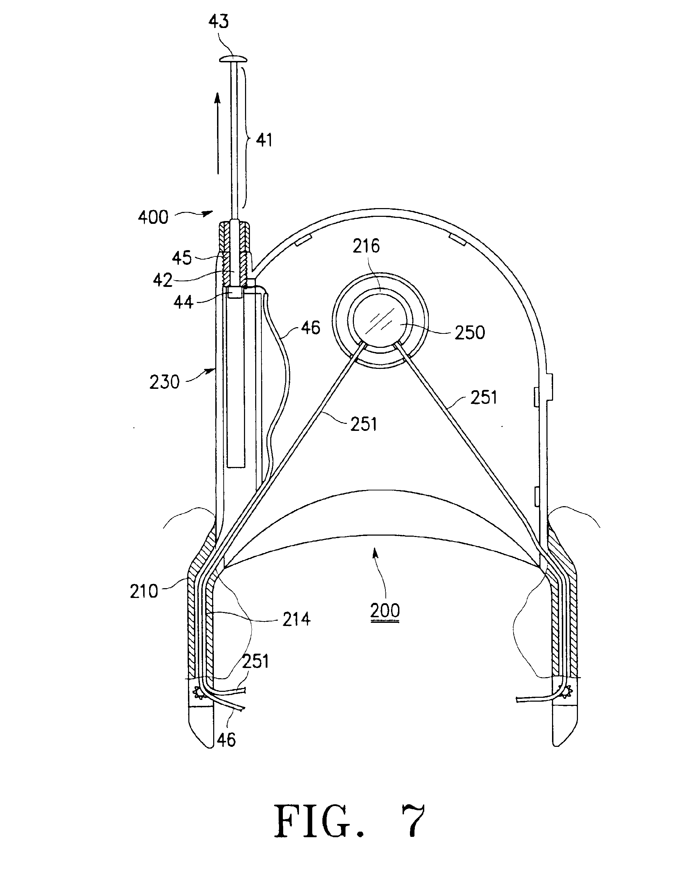

In the second embodiment of the present invention, a helical antenna (not shown) is held in the antenna housing 110 located at a top edge of the body 100, and a rod antenna (see FIGs. 6 and 7) is installed in the flip cover 200.

Under the antenna housing 110 are sequentially disposed the LCD 112 and a key pad covered with the flip cover 200. The microphone 116 is arranged in a lowermost portion of the body 100.

FIGs. 6 and 7 are partial sectional plan views of an antenna device installed in the flip cover with the rod antenna retracted and extended, respectively, according to the second preferred embodiment of the present invention.

In the second embodiment of the present invention, a rod antenna 400 and the speaker 250 are provided in the flip cover 200. The rod antenna 400 is extendable/retractable into/from the flip cover 200.

Referring to FIGs. 6 and 7, extension/retraction of the rod antenna will be described. The speaker 250 is fixedly fit in the rib 216 of the flip cover 200 and the wires 215 are extended from the speaker 250 and connected to a body through the holes 214 of the neck 210. Between a rod antenna and a helical antenna, the rod antenna is generally located in the flip cover.

The rod antenna 400 is extended/retracted from /into an antenna housing 230 of the flip cover 200. The antenna housing 230 is cylindrical and disposed at a side of the flip cover 200.

The rod antenna 400 makes a linear movement through a metallic antenna bushing 45 secured to an end of the antenna housing 230.

The rod antenna 400, which has a cap 43 secure to an end thereof, is divided into an insulating portion 41 and a conductive portion 42. A metallic stopper 44 is secured to an end of the conductive portion 42.

In FIG. 6, the insulating and conductive portions 41 and 42 are located within the antenna housing 230 when the rod antenna 400 is retracted.

When the rod antenna 400 is extended, the insulating portion 41 is exposed outward, whereas the conductive portion 42 contacts the antenna bushing 45, as shown in FIG. 7.

The antenna bushing 45 is a metallic conductor and electrically connected to the main board of the body by a wire 46. The wire 46 is directed toward the body through a hole 214 of the neck 210. An end of the wire 46 is fixedly soldered to the antenna bushing 45.

When a user opens the flip cover 200 for a call and transmit/receive sensitivity is poor, the rod antenna 400 is extended and then the antenna device operates.

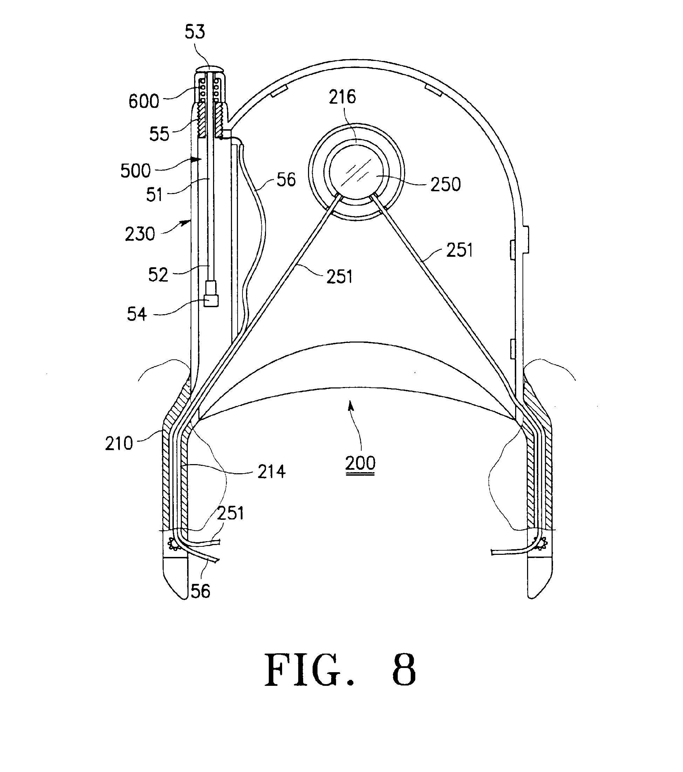

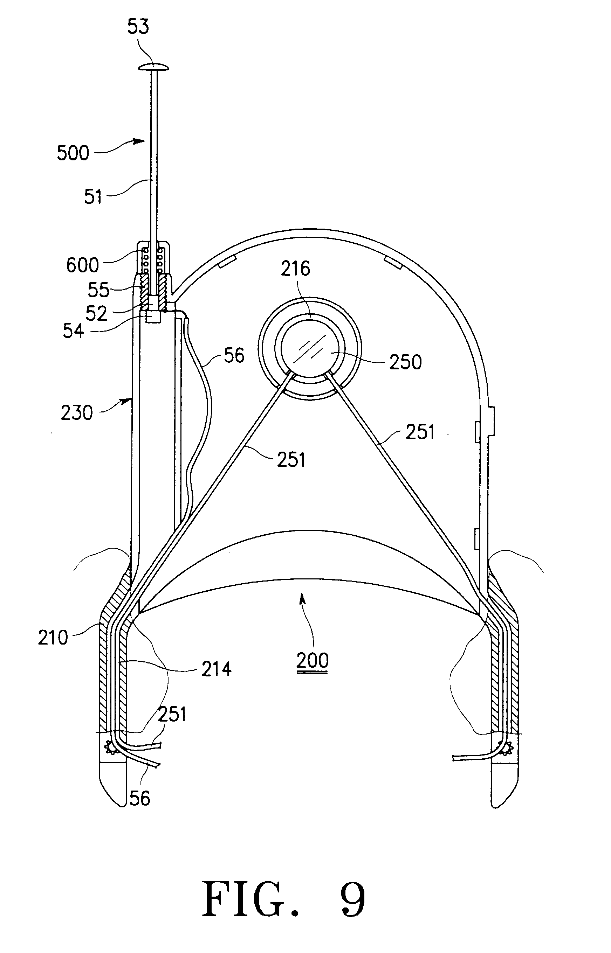

FIGs. 8 and 9 are partial sectional plan views of a flip cover having an antenna device installed therein with a rod antenna retracted and extended, respectively, according to a third preferred embodiment of the present invention.

Referring to FIGs. 8 and 9, a rod antenna 500 and a helical antenna 600 are held in the cylindrical antenna hosing 230 of the flip cover 200.

The rod antenna 500 is comprised of a conducting portion 52 having a stopper 54 secured to an end thereof and an insulating portion 51 having a cap 53 secured to an end thereof. An antenna bushing 55 being a metallic conductor is installed at an end portion of the antenna housing 230.

The helical antenna 600 is supported between an end of the antenna housing 230 and the antenna bushing 55, and the rod antenna 500 is extended/retracted through the helical antenna 600 and the antenna bushing 55.

An end of the helical antenna 600 makes contact with the antenna bushing 55 and the conducting portion 52 of the rod antenna 500 is electrically connected to the antenna bushing 55 in surface-contact with the antenna bushing 55 when the rod antenna 500 is retracted.

In FIG. 8, with the rod antenna 500 retracted, the insulating and conducting portions 51 and 52 are located within the antenna housing 230.

In FIG. 9, with the rod antenna 500 extended, the insulating portion 51 is exposed outward and the conducting portion 52 makes surface contact with the antenna bushing 55.

The antenna bushing 55 is a metallic conductor and electrically connected to the main board of a body by a wire 251. The wire 251 is directed toward the body through a hole 214 of the neck 210. An end of the wire 251 is fixedly soldered to the antenna bushing 55.

When a user opens the flip cover 200 for a call and transmit/receive sensitivity is poor, the rod antenna 500 is extended and then the antenna device operates. When the rod antenna 500 is retracted, the helical antenna 600 acts as a main antenna.

In accordance with the present invention as described above, an antenna device is located within a flip cover in a flip-up type portable phone. Accordingly, the present invention offers the benefits of user friendliness, various designs, and enhanced assembly and productivity. Furthermore, the present invention is adaptable to a folder type portable phone.

While the present invention has been described in detail with reference to the specific embodiments, they are mere exemplary applications. For example, the antenna core wire may be formed integrally with the flip cover during injection molding of the flip cover, or a conductive line is formed into a predetermined shape in the flip cover to function as an antenna. Thus, it is to be clearly understood that many variations can be made by anyone skilled in the art within the scope and spirit of the present invention.

## Claims

1. A flip-up type portable phone comprising:
a body having an exposed LCD (Liquid Crystal Display) and a main board;
a flip cover mechanically connected to the body by hinges and having necks extended from both sides of the flip cover, each of the necks including a hole formed by gas injection, and a groove formed to a predetermined length on a base plate of the flip cover; and
an antenna device having a portion fixed in the groove and a portion inserted into the hole and electrically connected to the main board of the body,
whereby the antenna device operates upon opening the flip cover.

2. A flip-up type portable phone comprising:
a body having an exposed LCD and a main board;
a flip cover mechanically connected to the body by hinges and having necks extended from both sides of the flip cover and a cylindrical antenna housing, each of the necks having a hole formed by gas injection;
a cylindrical antenna bushing being a metallic conductor and installed at an end of the antenna housing; and
a rod antenna held in the antenna housing and including an insulating portion with a cap secured to an end thereof and an conductive portion with a stopper secured to an end thereof, to be extended from the antenna bushing and retracted in contact with the antenna bushing; and
means for electrically connecting the antenna bushing to the main board of the body.

3. The flip-up type portable phone of claim 2, wherein the connecting means is a wire having an end soldered to the antenna bushing and the other end connected to the main board of the body through the hole of a neck.

4. The flip-up type portable phone of claims 3, further comprising a helical antenna supported between an end of the antenna housing and the antenna bushing and having an end in contact with the antenna bushing.

5. A folder type portable phone comprising:
a body;
a folder cover mechanically connected to the body by hinges and having necks extended from both sides of folder cover, each of the necks including a hole formed by gas injection, and a groove formed to a predetermined length on a base plate of the folder cover; and
an antenna device having a portion fixed in the groove and a portion inserted into the hole and electrically connected to the main board of the body,
whereby the antenna device operates upon opening the folder cover.

6. A folder type portable phone comprising:
a body;
a folder cover mechanically connected to the body by hinges and having necks extended from both sides of the folder cover and a cylindical antenna housing, each of the necks having a hole formed by gas injection;
a cylindrical antenna bushing being a metallic conductor and installed at an end of the antenna housing; and
a rod antenna held in the antenna housing and including an insulating portion with a cap secured to an end thereof and an conductive portion with a stopper secured to an end thereof, to be extended from the antenna bushing and retracted in contact with the antenna bushing; and
means for electrically connecting the antenna bushing to the main board of the body.

7. The folder type portable phone of claim 6, wherein the connecting means is a wire having an end soldered to the antenna bushing and the other end connected to the main board of the body through the hole of a neck.

8. The folder type portable phone of claim 7, further comprising:
a helical antenna supported between an end of the antenna housing and the antenna bushing and having an end in contact with the antenna bushing.
